**Europäisches Patentamt**

**European Patent Office**

**Office européen des brevets**

(19)

(11) **EP 1 331 777 A1**

(12) **EUROPEAN PATENT APPLICATION**

(43) Date of publication:
**30.07.2003 Bulletin 2003/31**

(51) Int Cl.7: **H04L 25/03**

(21) Application number: **02360041.4**

(22) Date of filing: **23.01.2002**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(71) Applicant: **Evolium S.A.S.**<br>**75008 Paris (FR)** | (72) Inventor: **Chizat, Romain**<br>**70197 Stuttgart (DE)**<br><br>(74) Representative: **Schultenkämper, Johannes et al**<br>**Alcatel,**<br>**Intellectual Property Department,**<br>**Stuttgart**<br>**70430 Stuttgart (DE)** |

(54) **DFE/MLSE equaliser**

(57) An equalizing method and devices such as an equalizer (EQ) for equalizing a received digital modulated signal (S) are proposed, the equalizer (EQ) comprising a decision feedback equalizing block (DFE) which processes the received signal (S) to produce soft decision symbols (SDS), and comprising a Viterbi equalizing block (LCV) which processes said symbols (SDS) by regarding the adjacent neighbor symbols (NBS) of each of said soft decision symbols (SDS) to produce hard decision symbols (HDS).

This new structure leads to a very efficiently working equalizer, but having a low complex design. This combination of a decision feedback equalization (DFE) process portion with a Viterbi equalization process portion has the consequence that the received signal is first in the DFE portion by reducing the number of symbols and by further reducing the length of the intersymbol interference (ISI) such that the successive Viterbi portion can be of simple structure only needing to regard the adjacent neighbor symbols of each of said soft decision symbols for finally producing hard decision symbols. The proposed equalization method could be called a "DFE-Assisted Viterbi Equalization" (DAVE) which provides much better results than a pure DFE.

Fig. 2

EP 1 331 777 A1

**Description**

The invention relates to a method of equalizing a received digital modulated signal, especially a mobile radio signal being received under multiple propagation conditions.

The invention also relates to devices for equalizing a received digital modulated signal according to that method, the devices being an equalizer, a receiver, an access point station and a user terminal.

The invention further relates to a communication system having such devices.

In communication technologies, particular in mobile communication technologies, digital modulated signals are transmitted to provide services such as voice or data services with high quality and efficiency. However, the propagation conditions on the transmission channel is quite often dissatisfying and even varying strongly in time because of effects like cochannel interference or Raleigh fading. In order to overcome these problems a lot of measures have to be taken at the receiving end. One appropriate principle is the equalization of the received signal within the equalizer of the receiver by well-known algorithm, such as Decision Feedback Equalizing (DFE) algorithm or Viterbi algorithm and Maximum Likelihood Sequence Estimation (MLSE).

The MLSE and the Viterbi algorithm provide an ideal equalizer in term of performance. Yet its complexity prevents it to be used for big constellations and large intersymbol interference (ISI) in many practical cases. The equalization problem to be discussed here can be characterized by the number Q of symbols appearing in the constellation and the length L of intersymbol interference (ISI). The MLSE complexity is proportionnal to $Q^L$, i.e. the implementation efforts are raising dramatically even when the increase of the ISI length L is quite low. On the other hand a DFE solution which is much less complex does, in terms of performance, only provide minor good results.

It is an object of the invention to provide a method of equalizing a received digital modulated signal which insures a high performance, but low implementation efforts to be needed.

A further object of the invention is to provide devices, in particular an equalizer, a receiver, an access point station and an user terminal, which are operating according to that method.

For a method as described above, the object is solved according to the invention in that the received signal is processed in a decision feedback equalizing algorithm to produce soft decision symbols, said symbols are then processed in a Viterbi equalizing algorithm which is regarding the adjacent neighbor symbols of each of said soft decision symbols to produce hard decision symbols.

For an equalizer as described above the object is solved according to the invention by introducing into the equalizer a decision feedback equalizing block which processes the received signal to produce soft decision symbols, and also introducing a Viterbi equalizing block which processes said symbols by regarding the adjacent neighbor symbols of each of said soft decision symbols to produce hard decision symbols.

For a receiver, an access point station or an user terminal as described above the object is solved according to the invention by introducing such an equalizer comprising a decision feedback equalizing block which processes the received signal to produce soft decision symbols, and also comprising a Viterbi equalizing block which processes said symbols by regarding the adjacent neighbor symbols of each of said soft decision symbols to produce hard decision symbols.

The proposed combination of a decision feedback equalizing block with a successive Viterbi equalizing block leads to a very efficiently working equalizer, but having a low complex design. This combination of a decision feedback equalization (DFE) process portion with a Viterbi equalization process portion has the consequence that the received signal is first in the DFE portion by reducing the number of symbols and by further reducing the length of the intersymbol interference (ISI) such that the successive Viterbi portion can be of simple structure only needing to regard the adjacent neighbor symbols of each of said soft decision symbols for finally producing hard decision symbols which are more reliable than the soft-decisions of a pure DFE. The proposed method hereby overcomes the drawbacks of the prior art by firstly reducing in the DFE part the constellation of symbols and the ISI length and then in the Viterbi part further processing with a much lower complexity. That is why the proposed equalization method could be called a "DFE-Assisted Viterbi Equalization" (DAVE). This new and inventive algorithm proposed here provides much better results than a pure DFE.

In an preferred embodiment of the invention the decision feedback equalizing algorithm comprises a feed forward signal processing step for filtering the received signal and feedback signal processing steps including a threshold operation. To this respect it is advantages that the feed forward filtering operation (121) is reducing the intersymbol interference to let the successive Viterbi equalizing algorithm (130) benefit of the reduced constraint length.

The preceding DFE processing gives a very useful information (the soft-decisions) for a very low complexity (compared to a MLSE), which can be seen as a first approximation of the final decisions. Moreover, the output of the feed forward filter (A filter) is a signal with a decreased Inter Symbol Interference in comparison with the received signal S. In this way the Viterbi algorithm uses the soft-decisions of the DFE to reduce the number of symbols considered in its processing. This result could be represents a reduced constellation of symbols.

Further to this the Viterbi equalizing algorithm may perform a metric computation and a matched filtering operation is introduced as a pre-processing for the Viterbi algorithm, the matched filtering reduces the complexity of that metric computation.

In another embodiment the received signal is a mobile radio signal received under multiple propagation conditions. A simplified Viterbi algorithm can be used wherein the number of paths in the treillis is reduced and the complexity too.

The principle of the invention, its applicability and the advantages resulting therefrom will become more apparent in the following description of a preferred embodiment and in the illustration from the enclosed figures:

Figure 1    shows a flow chart of a equalization method according to the invention,
Figure 2    shows a schematic block diagram of an receiver with an equalizer structure according to the invention,
Figure 3    shows a constellation of symbols for a 8-PSK modulation scheme and the reduction of this constellation resulting from the DFE part of the method according to the invention.

The following description of one embodiment of the invention is directed to the use of the proposed equalization for processing 8-PSK modulated signals received in a mobile radio communications system. This of course shall not limit the scope of the claimed invention only to this kind of technology. Furthermore the field of application is much broader in the sense that the principle of the invention can be applied in any telecommunications system, in all wireless or wired systems wherein digital signals are transmitted, such as satellite supported transmission systems or networks, terrestrial transmission systems, esp. directional and fixed wired radio systems (LMDS), or broadband line transmission systems, esp. optical transmission systems.

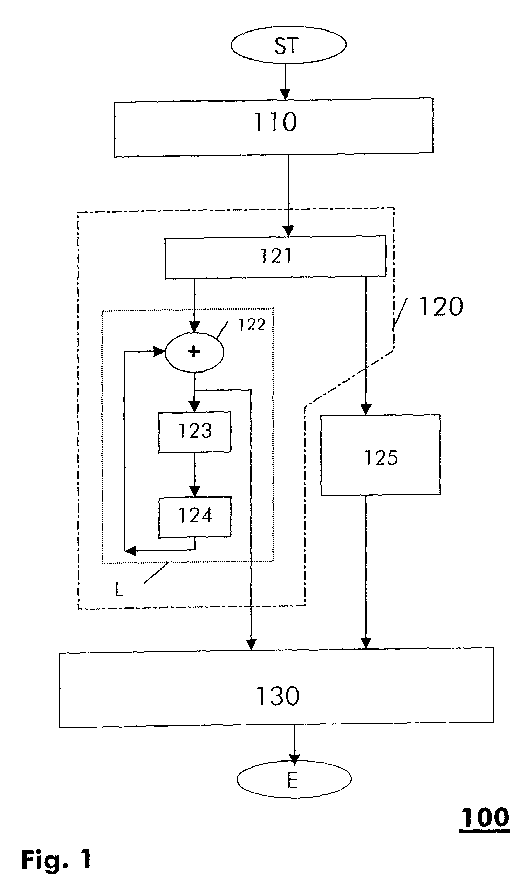

Now reference is made to the enclosed figures 1 to 3 for describing a preferred embodiment of the invention:

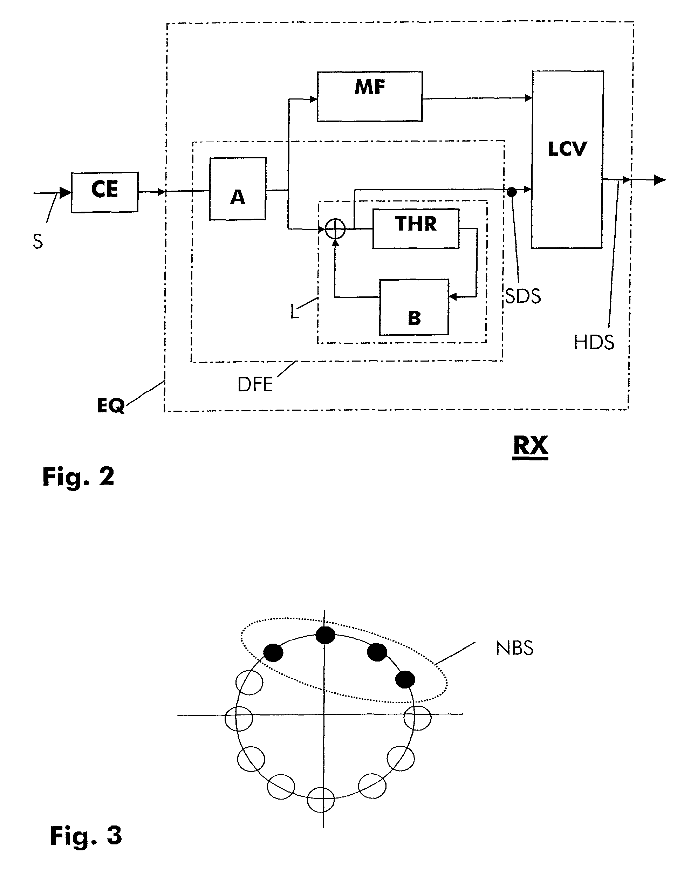

In Fig. 1 there is shown the flow diagram of the proposed method 100 for equalizing a received digital modulated radio signal (see signal S in figure 2) which is transmitted in a mobile radio system. The method 100 starting at point ST with the first step 110 in which the channel impulse response (CIR) of the radio channel is estimated. This process which is known per se is performed in the corresponding channel estimator block of the receiver shown in Fig. 2.

Then in a successive process 120 with steps 121 to 124 the received signal is partly equalized by decision feedback equalizing (DFE) the signal to obtain soft decision symbols, the corresponding hardware block is shown in Fig.2 (see "DFE") as being a first part of the equalizer EQ of the receiver RX.

The performed DFE process 120 is starting with step 121 in which the incoming signal is firstly filtered by a so-called A-filter which is the feed forward filter corresponding to block A of the equalizer EQ shown in Fig. 2. Such a filter is known per se from prior art DFE structure as being described e.g. in chapter 6.5 on pages 593 ff. of the book "Digital Communications" 2$^{nd}$ Edition,written by John G. Proakis and published by McGraw-Hill Book Company, New York. The content of this citation is hereby incorporated into the disclosure of the present specification. The filtered output is then further processed in matched filtering 125 and in parallel within a decision feedback loop 122/4 comprising the steps 122 to 124.

Again, the matched filtering process 125 and the corresponding hardware block MF shown in Fig.1 are per se known from prior art as cited above (see chapter 6.3). The matched filter is not a part of the DFE but of a Maximum-likelihood demodulator which is known per se also from the above cited Proakis book in chapter 6.3 on pages 548 ff. Also the feedback loop 122/4 which corresponds to the hardware block L shown in the Fig. 2 is known from that and equivalent citations. The loop 122/4 comprises a first step 122 for adding to the output from the A-filter (filtering in step 121) the feedback signal outputted at the successive chain having steps 123 and 123. The step 123 is for comparing the sum signal resulting from step 122 with a given threshold. Then the resulting signal therefrom is further processed in step 124 representing a filtering operation which is performed in the so-called B-filter which is a feedback filter as shown in block B of Fig. 2. A B-filter as such is also known from prior art DFE structures. The output of the B-filter (filtering in step 124) is fed back to step 122 as mentioned above to correct the received signal by adding this B-filter output signal. The resulting signal from step 122 is then representing soft decision symbol to be inputted into the next step 130 in which the successive low-complex Viterbi process is performed, the step 130 is corresponding to the block LCV of Fig. 2. In parallel the output from step 125 corresponding to the matched filter block MF in Fig. 2 is fed as well to this Viterbi process (step 130; block LCV).

The function and advantages of the proposed equalizing method and structure shall be explained now in more detail whereby reference is made to Fig. 3:

As stated in the introduction the well-known equalizing method and devices result only in a suboptimal equalization of linear digital modulated signals. This problem is especially strong for big constellations in presence of large intersymbol interference (ISI), e.g. when a equalization of 8-PSK modulation for radio mobile channels shall be performed.

The prior art Maximum Likelihood Sequence Estimation (MLSE) and the Viterbi algorithm both provide an ideal equalizer in term of performance. Yet its complexity prevents it to be used for big constellations and large ISI in many practical cases.

The algorithm of the proposed method can provide much better results than a conventional Decision Feedback Equalizer (DFE).

As mentioned above and shown in Fig. 3 the equalization problem addressed here is characterized by the number Q of symbols in the constellation and the length L of intersymbol interference. The prior art MLSE complexity is proportional to $Q^L$ which is too large even for small L.

The algorithm proposed here reduces the constellation of Q symbols to Qred (e.g. Qred = 4 < Q = 12; see Fig.3) symbols and also reduces the ISI length to Lred (Lred<L). This reduction effect is achieved the DFE algorithm resulting in a simplified equalization problem. The equalization process is then further improved and finished by a Viterbi algorithm with a low complexity proportional to Qred $^{Lred}$. Therefor one could call it a "DFE-Assisted Viterbi Equalizing" (DAVE) concept which is presented here.

With reference to the Figures 1-3 let us denote S the stream of emitted symbols (belonging to a Q-symbol constellation) and CE the channel impulse response including all the filterings which introduce a L-length intersymbol interference. The filter CE is supposed to be known or at least estimated. The noise is supposed additive and gaussian with zero mean.

The filters A, B, the threshold THR and the feedback loop belong to the DFE equalizer principle. The calculus of A and B depends on the wanted Lred and requires the knowledge of CE and of the noise autocorrelation function. It is the same mathematical solution as for a DFE using the mean-square error criterion.

The feed forward filter A acts as an ISI reducing filter. The residual ISI length after A is a parameter linked to the backward filter B length. If K is the length of B, then Lred=K+1, i.e. the residual ISI in output of A is on Lred symbols.

The soft-output of a DFE equalizer is a very interesting information even in the case it is erroneous: the emitted symbol is very likely to be among the neighbors of the detected symbol. The set of the Qred closest neighbor symbols of this soft-decision represents the reduced constellation (black dots in Fig. 3). Let us notice that it is a "moving" constellation since it is different for each DFE-equalized symbol.

The filter A output is then filtered by a matched filter MF having the function (CE*A)*(-t). The resulting signal and the reduced constellation are the input of the Viterbi algorithm LCV with a low complexity proportional to Qred $^{Lred}$. The Viterbi algorithm output is the hard-decision estimate HDS of the emitted symbols.

To give an example of a 8-PSK modulation for a radio mobile channel: The radio mobile channel (e.g. TU3) and a shaping filter providing a spectrum comparable to GSM spectrum approximately introduce a 5-symbol length intersymbol interference. Hence L=5.

The 8-PSK is an 8-symbol constellation modulation. Hence Q=8.
A good trade-off between performance and complexity can be achieved with Lred=3 and Qred=4.

The MLSE complexity is proportional to $8^5$= 32768. Assuming that the ISI and constellation reduction process is as complex as the further low complexity Viterbi algorithm (which is very pessimistic), the DAVE complexity is proportional to $2*4^3$=128, i.e. more than 200 times less complex than MLSE.

For raw bit error rates at 25 dB SNR in GSM simulation conditions, the loss of performance is about 1.5 dB compared to MLSE whereas the gain is about 2.5 dB compared to DFE.

There are further improvements which can be achieved by :

The above described DFE-Assisted Viterbi Equalizer (DAVE) is a good optimization of performance and complexity to be applied to the most mobile radio channels. In fact this means that we can find parameters for the DAVE structure for which the performance is good and the complexity low. However, in very long delay radio channel, which can be found e.g. in Hilly Terrain environment and for some bursts whose Channel Impulse Response has zeros near the unit circle, the parameters for which the DAVE structure provide good performance make this receiver structure too complex. In other words : In some critical cases, this DAVE structure might not be the best compromise between performance and complexity. Then a pure DFE structure could have a better compromise.

In the following a criterion will be introduced in order to choose adaptively the equalizer structure which provide the best compromise between complexity and performance.

It is proposed to estimate for each burst the quality of the DAVE structure realized with an "acceptable" complexity. If this quality is good then we continue the equalization with the DAVE structure. Otherwise, we switch to a pure DFE structure.

Let us denote $s_k$ the stream of emitted symbols (belonging to a Q-symbol constellation) and CIR(†) the channel impulse response including all the filterings which introduce a L-length intersymbol interference. The filter CIR is supposed to be known or at least estimated. The noise is supposed additive and gaussian with zero mean.

The filters A, B, the threshold and the feedback loop belong to the DFE equalizer principle. The calculus of A and B depends on the wanted Lred and requires the knowledge of CIR and of the noise autocorrelation function. It is the same mathematical solution as for a DFE using the mean-square error criterion.

Of course the "pure" DFE structure is an extract of the DAVE structure. It is the same without matched filter and without low complexity Viterbi algorithm. Therefor this could also be seen as a DAVE structure with Qred = 1. Two parameters are common with the DAVE structure : the length of the A filter and K, the length of the B filter.

In fact, the two equalizer structures DAVE or pure DFE are similar. They mainly differ in having different parameters, which should be optimized according to the burst characteristics.

For some bursts, the channel impulse response estimation is such as the A filter should be much longer than "usual". In general, longer CIR (in long delay channels, like Hilly Terrain for example) require a longer A. But this is not the only reason. Some bursts additionally have a CIR whose zeros are very near the unit circle. Since A is a kind of inversion of the CIR, such zeros of the CIR cause a slow decrease of the filter A. In such cases, the A filter should be untypically long. Such bursts can be called "difficult" bursts.

In the proposed configuration of the DAVE structure, i.e. dimensioned for the majority of the cases, "difficult" bursts are equalised with a strong residual intersymbol interference. This is not a problem if the noise is stronger, but with a low noise, this causes a high error floor (especially for HT100, MCS-8).

The length of the A filter has a dramatic influence on the complexity of the DAVE and the DFE structures. For both DFE and DAVE structures, there is a limit beyond which increasing the A filter length does no more improve the performance, even in the cases described above. This limit depends on the B filter length (K). For a short filter B (for example K=2), the A filter length should be quite high to reach the optimum performance (>30 for K=2 ).

For a longer B filter, the optimum A filter length is smaller. This incites us to increase K, but this means increasing slightly the DFE complexity and exponentially the complexity of the low Viterbi equaliser for the DAVE structure. Therefore, we can nearly freely increase K in the DFE structure, but not in the DAVE structure. For such bursts, a simple DFE with K>2 reaches better results than the proposed DAVE structure, with the same number of coefficients for A. Indeed, when K grows, the A filter requirements are "relaxed" and A can be shorter.

This is the reason why a switch between two equaliser structures bring a significant performance improvement in a complexity optimised receiver. The following two switch criterions are proposed:

A first switch criterion consists of computing the residual Intersymbol Interference after a first A filter coefficient calculation with K=2, which is the first step of DAVE. If it is higher than a certain threshold then with compute again A filter with K=4 and we do a simple DFE equalisation. It means nearly no additional cycles for the DAVE path, and two A filter computations for the DFE path. In that way the complexity of the DFE path is certainly not optimised, but since it is naturally less complex than the other one (we can save the matched filtering and the Viterbi algorithm) this is not a critical.

When a CIR length of 8 has been detected:
Compute the A coefficients a first time with K=2. And compute residual ISI after this:

$$ISIresidual_n = \sum_{i=0}^{7} h_i A_{n-i}$$

Normally we have ISIresidual(M) $\approx$ 1, ISIresidual(M+1) = -b1,
ISIresidual(M+2) = -b2

$$\text{If } |ISIresidual(M + 3)|^2 + |ISIresidual(M + 4)|^2 + |ISIresidual(M + 5)|^2 > 0.005$$

Then compute A coefficients again with K=4 and do a simple DFE.
Else do DAVE with Qred=3 (normal configuration).

A second switch criterion is based on the distance between the CIR zeros and the unit circle. In terms of complexity, this would maybe be optimal. But it would require the implementation of a roots searching algorithm, which is quite complex and at least time consuming.

Simulation results have shown, that in most cases (nearly 100% of the bursts in Static, Typical Urban, and Rural Area environments and 85% of the bursts in a Hilly Terrain channel), DAVE with K=2 provides better results than DFE with any value for K, for the same A length (18). In about 15 % of the burst in a Hilly Terrain channel, the DFE with K=4 provides better results than DAVE with K=4 for A length=18.

**Claims**

1. A method (100) of equalizing a received digital modulated signal (S) wherein the received signal (S) is processed in a decision feedback equalizing algorithm (120; DFE) to produce soft decision symbols (SDS), said symbols (SDS) are then processed (130) in a Viterbi equalizing algorithm (130) which is regarding the adjacent neighbor symbols (NBS) of each of said soft decision symbols (SDS) to produce hard decision symbols (HDS).

2. The method (100) of claim 1 wherein the a decision feedback equalizing algorithm (120) comprising a feed forward signal processing step (121) for performing a feed forward filtering of the received signal (S) and feedback signal processing steps (123, 124) including including a threshold operation (123).

3. A method (100) of claim 2 wherein the Viterbi equalizing algorithm (130) is performing a metric computation and wherein the feed forward filtering operation (121) is reducing the intersymbol interference to let the Viterbi equalizing algorithm (130) benefit of the reduced constraint length.

4. The method (100) of claim 1 wherein a matched filtering operation (125) is performed as a pre-processing of the Viterbi equalizing algorithm (130) and wherein the Viterbi equalizing algorithm (130) is performing a metric computation and wherein the matched filtering operation (125) is reducing the complexity of that metric computation.

5. A method (100) of claim 1 wherein the received signal (S) is a mobile radio signal received under multiple propagation conditions.

6. An equalizer (EQ) for equalizing a received digital modulated signal (S), the equalizer (EQ) comprising a decision feedback equalizing block (DFE) which processes the received signal (S) to produce soft decision symbols (SDS), and comprising a Viterbi equalizing block (LCV) which processes said symbols (SDS) by regarding the adjacent neighbor symbols (NBS) of each of said soft decision symbols (SDS) to produce hard decision symbols (HDS).

7. A receiver (RX) with an equalizer (EQ) for equalizing a received digital modulated signal (S), the equalizer (EQ) comprising a decision feedback equalizing block (DFE) which processes the received signal (S) to produce soft decision symbols (SDS), and comprising a Viterbi equalizing block (LCV) which processes said symbols (SDS) by regarding the adjacent neighbor symbols (NBS) of each of said soft decision symbols (SDS) to produce hard decision symbols (HDS).

8. An access point station for a communications network, in particular a base station for a mobile communications network, the station having a radio receiver (RX) with an equalizer (EQ) for equalizing a received digital modulated signal (S), the equalizer (EQ) comprising a decision feedback equalizing block (DFE) which processes the received signal (S) to produce soft decision symbols (SDS), and comprising a Viterbi equalizing block (LCV) which processes said symbols (SDS) by regarding the adjacent neighbor symbols (NBS) of each of said soft decision symbols (SDS) to produce hard decision symbols (HDS).

9. A user terminal for operating in a communications network, in particular a mobile terminal for operating in a mobile communications network, the terminal having a receiver (RX) with an equalizer (EQ) for equalizing a received digital modulated signal (S), the equalizer (EQ) comprising a decision feedback equalizing block (DFE) which processes the received signal (S) to produce soft decision symbols (SDS), and comprising a Viterbi equalizing block (LCV) which processes said symbols (SDS) by regarding the adjacent neighbor symbols (NBS) of each of said soft decision symbols (SDS) to produce hard decision symbols (HDS).

Fig. 1

100

**Fig. 2**

**Fig. 3**

## EUROPEAN SEARCH REPORT

**European Patent Office**

**Application Number**

EP 02 36 0041

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 065 851 A (MOTOROLA INC) 3 January 2001 (2001-01-03) * page 8 – page 11 * * page 14-16 * * page 25-27 * * page 33 – page 36 * --- | 1-9 | H04L25/03 |
| X | QURESHI S U H ET AL: "REDUCED-STATE SEQUENCE ESTIMATION WITH SET PARTITIONING AND DECISION FEEDBACK" IEEE TRANSACTIONS ON COMMUNICATIONS, IEEE INC. NEW YORK, US, vol. 36, no. 1, January 1988 (1988-01), pages 13-20, XP000758632 ISSN: 0090-6778 * page 14 – page 16 ; Section III * --- | 1-9 | |
| X | GU Y ET AL: "AN ADAPTIVE COMBINED DFE/RSSE STRUCTURE FOR UNKNOWN CHANNEL WITH SEVERE ISI" WIRELESS PERSONAL COMMUNICATIONS, KLUWER ACADEMIC PUBLISHERS, NL, vol. 14, no. 1, July 2000 (2000-07), pages 13-26, XP000919861 ISSN: 0929-6212 * page 13 – page 20 * --- -/-- | 1-9 | TECHNICAL FIELDS SEARCHED (Int.Cl.7) H04L |

The present search report has been drawn up for all claims

| Place of search | Date of completion of the search | Examiner |
|---|---|---|
| THE HAGUE | 12 July 2002 | Koukourlis, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

**European Patent Office**

# EUROPEAN SEARCH REPORT

**Application Number**

EP 02 36 0041

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | LEE W U ET AL: "A MAXIMUM-LIKELIHOOD SEQUENCE ESTIMATOR WITH DECISION-FEEDBACK EQUALIZATION" IEEE TRANSACTIONS ON COMMUNICATIONS, IEEE INC. NEW YORK, US, vol. 25, no. 9, 1 September 1977 (1977-09-01), pages 971-979, XP000573377 ISSN: 0090-6778 * page 972, left-hand column, paragraph 4 - page 973, left-hand column, paragraph 2 * | 1-9 | |
| A | DUEL-HALLEN A ET AL: "Delayed decision-feedback sequence estimation" IEEE TRANSACTIONS ON COMMUNICATIONS, MAY 1989, USA, vol. 37, no. 5, pages 428-436, XP002205770 ISSN: 0090-6778 * abstract * * page 428, left-hand column, paragraph 3 - right-hand column, paragraph 1 * | 1-9 | TECHNICAL FIELDS SEARCHED (Int.Cl.7) |
| A | CHEUNG J C S ET AL: "SOFT-DECISION FEEDBACK EQUALIZER FOR CONTINUOUS PHASE MODULATED SIGNALS IN WIDEBAND MOBILE RADIO CHANNELS" IEEE TRANSACTIONS ON COMMUNICATIONS, IEEE INC. NEW YORK, US, vol. 42, no. 2/3/4, 1 February 1994 (1994-02-01), pages 1628-1638, XP000447396 ISSN: 0090-6778 * abstract * * page 1628 * * page 1629, right-hand column, paragraph 5 - left-hand column, paragraph 1 * | 1-9 | |

*The present search report has been drawn up for all claims*

| Place of search | Date of completion of the search | Examiner |
|---|---|---|
| THE HAGUE | 12 July 2002 | Koukourlis, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                 EP 02 36 0041

This annex lists the patent family members relating to the patent documents cited in the above–mentioned European search report.
The members are as contained in the European Patent Office EDP file on
The European Patent Office is in no way liable for these particulars which are merely given for the purpose of information.

12-07-2002

| Patent document cited in search report | Publication date | Patent family member(s) | Publication date |
|---|---|---|---|
| EP  1065851        A | 03-01-2001 | EP        1065851 A1 | 03-01-2001 |

EPO FORM P0459

For more details about this annex : see Official Journal of the European Patent Office, No. 12/82